(19) Europäisches Patentamt
European Patent Office
Office européen des brevets

(11) **EP 4 187 213 A1**

(12) **EUROPEAN PATENT APPLICATION**
published in accordance with Art. 153(4) EPC

(43) Date of publication:
**31.05.2023 Bulletin 2023/22**

(21) Application number: **22849782.2**

(22) Date of filing: **19.07.2022**

(51) International Patent Classification (IPC):
*G01G 17/08* (2006.01)    *G01G 9/00* (2006.01)
*G06T 7/50* (2017.01)    *G06T 17/00* (2006.01)
*G06N 3/08* (2023.01)

(52) Cooperative Patent Classification (CPC):
**G01G 9/00; G01G 17/08; G06N 3/08; G06T 7/50; G06T 17/00**

(86) International application number:
**PCT/KR2022/010504**

(87) International publication number:
**WO 2023/008806 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2021 KR 20210100865**

(71) Applicant: **Illu-vation Co., Ltd**
**Jeonju-si, Jeollabuk-do 54871 (KR)**

(72) Inventors:
• **WON, Hyoung Pil**
**Jeonju-si Jeollabuk-do 54920 (KR)**
• **JUN, Hyun Il**
**Jeonju-si Jeollabuk-do 54893 (KR)**
• **OH, Jae Hyun**
**Jeonju-si Jeollabuk-do 54956 (KR)**
• **JUNG, Sung Hoon**
**Jeonju-si Jeollabuk-do 54865 (KR)**
• **KIM, Deok Yong**
**Jeonju-si Jeollabuk-do 54879 (KR)**

(74) Representative: **Heubeck, Christian**
**Weickmann & Weickmann**
**Patent- und Rechtsanwälte PartmbB**
**Postfach 860 820**
**81635 München (DE)**

(54) **RGB-D-BASED AI SYSTEM FOR INFERRING WEIGHT OF LIVESTOCK, AND COMPUTER-READABLE MEDIUM HAVING RECORDED THEREON COMPUTER PROGRAM FOR PROVIDING SAME**

(57)    The present invention may provide an AI system for inferring the weight of livestock, comprising: a data collection unit for collecting, as one data set, 3D data and a 2D image acquired by capturing one or more livestock animals, wherein one or more data sets are collected; a weight inference unit for predicting the weight of a target livestock animal from the data set(s), and proposing a similarity function value and a recommended weight value on the basis of a knowledge database; and a comprehensive weight prediction model for deriving a final weight prediction value by receiving a weight prediction result value based on the data set(s) and predicted by the weight inference unit.

**EP 4 187 213 A1**

FIG. 1

**Description**

[TECHNICAL FIELD]

The present invention relates to an RGB-D-based livestock weight inference AI system and a computer-readable medium, and more particularly, to an RGB-D-based livestock weight inference AI system in which the accuracy of livestock weight prediction is better and the rapid measurement is enabled by inferring the weight of livestock by using 2D images and 3D data together based on RGB-D, and a computer-readable medium.

[BACKGROUND]

In the case of the livestock industry, regular weight management is required for livestock breeding management.
In particular, in the case of pig farms, the standard for shipment is very important, and the farm's income varies greatly depending on the shipment of pigs that meet the standard. Pigs are graded according to quantitative standards based on weight and fat thickness and qualitative standards based on fat distribution and meat color of pork. In general, pigs weighting from 115 kg to 120 kg are called standard pigs.
A higher grade can be received if the weight of the standard pig is satisfied. Therefore, it is very important to accurately measure the weight and select pigs for shipment.
To this end, the need for periodic weight measurement or monitoring is required in the field.
Currently, the weight of pigs is measured by a chest measurement method and a pig weight bridge.
The chest measurement method converts the weight by applying a value acquired by measuring the chest of the pig with a tape measure to a weight calculation formula. The chest measurement method is used with the advantage that it does not require the installation of special facilities, but it has a problem in that the measurement error is very large.
In addition, the pig weight bridge directly measures the weight of pigs in an enclosed space after installing an auxiliary device on a scale for measuring the weight of pigs. In order to measure the weight of pigs, it is inconvenient to guide all pigs into a pig weight bridge and then stop for a certain time in the pig weight bridge. In this process, there is a problem in that it takes about 10 minutes or more for a single worker to measure the weight of one pig. Due to the pig manure, there are frequent breakdowns of electronic scales and difficulties in maintenance.
Therefore, there is a need for a technology that can easily and accurately measure the weight of livestock to continuously manage the weight of livestock and reduce the labor force of farms and to easily determine the time of shipment through this.
Recently, a system or a method for predicting the volume, weight, etc. of livestock through images of livestock have been developed. However, there is a problem of low accuracy due to errors caused by interference factors (sunlight, movement of livestock, etc.) and other objects (ground, structure, etc.).
In addition, when recognizing livestock from images and deriving weight, etc., it is based on length measurement technology. Accordingly, there is a high possibility of accuracy deterioration due to noise, etc., and there is a limitation in processing speed. As the prior art, Korean Patent Registration No. 10-2122131, entitled "Livestock Weight Measuring System and Livestock Weight Measuring Method using the Same", is disclosed.
Therefore, there is a need to develop a livestock weight measurement technology with excellent accuracy and improved inference speed by applying a direct recognition method using 3D data.

[Summary of Invention]

[Technical Problem]

In order to solve the above problems, the present invention aims to provide an RGB-D-based AI system for inferring the weight of livestock, in which the accuracy of livestock weight prediction is better and the rapid measurement is possible by inferring the weight of livestock by using 2D images and 3D data together based on RGB-D, and a computer-readable medium.

[Solution to Problem]

In order to solve the above problems, an RGB-D-based livestock weight inference AI system according to an embodiment of the present invention may include: a data collection unit for collecting, as one data set, 3D data and a 2D image acquired by capturing one or more livestock animals, wherein one or more data sets are collected; a weight inference unit for predicting the weight of a target livestock animal from the data set(s) and proposing a similarity function value and a recommended weight value, based on a knowledge database; and a comprehensive weight prediction model for deriving a final weight prediction value by receiving a weight prediction result value based on the data set(s) and predicted by the weight inference unit, wherein the weight inference unit may include: a target livestock 3D inference model for generating a weight map by receiving the data set(s) and extracting target livestock whose weight is to be measured; a spatial volume extraction model for dividing the weight map into a plurality of patches and generating a plurality of spatial volume information according to the patches; and a weight inference model for predicting weight from the plurality of spatial volume information and deriving a weight prediction result value.

The weight inference unit may further include a weight recommendation model for proposing the similarity function value and the recommended weight value by searching for knowledge through the data set in a knowledge database in which knowledge including a patch size, a plurality of spatial volume information, and a weight is stored, and the comprehensive weight prediction model receives the weight prediction result value, the similarity function value, and the recommended weight value based on the data set and derives the final weight prediction value.

In addition, the target livestock 3D inference model may include: a 2D depth map estimation model for inferring an estimated depth map from the 2D image of the data set; a 3D depth map generation model for generating a measured depth map from the 3D image of the data set; a depth map selection unit for selecting one of the estimated depth map and the measured depth map as a precise depth map; a mask generation unit for generating a mask for extracting the target livestock by using the 2D image of the data set and the precise depth map; and a 3D extraction unit for generating a weight map, which is 3D information of the target livestock, from the 3D data of the data set through the mask.

In addition, the spatial volume extraction model may include: a patch division unit for dividing the weight map into equal sizes to configure a plurality of patches; and a bias setting unit for deriving inductive bias information for each patch and generating spatial volume information including the patches and the inductive bias information, and the inductive bias information may include at least one of an average, a standard deviation, a minimum value, and a maximum value of a spatial volume according to the patches.

In addition, the weight inference model may include: a first weight prediction unit for linearly converting inductive bias information of the space volume information and deriving a first weight prediction value by extracting a feature from the linearly converted inductive bias information; a second weight prediction unit for linearly converting the patches of the spatial volume information, converting the linearly converted patches into tensors, and deriving a second weight prediction value by extracting a feature from the patches converted into the tensors; and a prediction conclusion unit for deriving a weight prediction result value by using the first and second weight prediction values acquired by the first and second weight prediction units.

In addition, the second weight prediction unit may include: a partial feature extraction unit for linearly converting the patches of the spatial volume information, converting the linearly converted patches into tensors, and extracting the feature from the patches converted into the tensors; and an overall feature extraction unit for transposing a feature tensor, which is a result of feature extraction through the first weight prediction unit, and deriving the second weight prediction value by extracting a feature from the transposed feature tensor.

In addition, the weight recommendation model may search for knowledge by using a plurality of spatial volume information of the data set based on the patch size in the knowledge database, may select knowledge having a high similarity by calculating a similarity function value between the knowledge and the data set in a knowledge search result, and may propose a similarity function value and a recommended weight value according to the selected knowledge.

In addition, the comprehensive weight prediction model may include: an inference feature extraction unit for receiving the weight prediction result value based on the one or more data sets and generating weight inference feature information based on the weight prediction result value through inference; an integration unit for receiving the weight inference feature information, the similarity function value, and the recommended weight value and integrating the information through a linear conversion; and a comprehensive weight prediction unit for deriving the final weight prediction value from the integrated information.

In addition, there is provided a computer-readable recording medium having recorded thereon a computer program for providing the system according to the embodiment of the present invention.

[ADVANTAGEOUS EFFECTS]

In an RGB-D-based livestock weight inference AI system and a computer-readable medium, the accuracy of livestock weight prediction is better by inferring the weight of livestock by using 2D images and 3D data together based on RGB-D.

In addition, faster measurement may be enabled by applying an AI-based direct recognition technology.

In addition, since the weight is derived by considering a recommended weight value and a similarity function value based on a knowledge database, the accuracy and reliability of a system may be secured by inferring the weight more accurately even when a non-trained data set is input.

In addition, no additional facilities are required to measure the weight of livestock, and there is no inconvenience of guiding livestock to stop for a certain time so as to measure the weight. Therefore, it is possible to solve the problems caused by the shortage of manpower in farms, the aging of manpower, and the enlargement of scale.

In this manner, it is easy to manage the weight of livestock continuously and it is possible to accurately predict the time of shipment, thereby increasing the incomes of farmers.

On the other hand, the present invention may be applied not only to pigs but also to various livestock such as chickens and cows, thereby expecting that the utilization thereof will be expanded.

[BRIEF DESCRIPTION OF THE DRAWINGS]

FIG. 1 is a block diagram illustrating an RGB-D-based livestock weight inference AI system according to an embodiment of the present invention.

FIG. 2 is a block diagram illustrating a target livestock 3D extraction model of FIG. 1.

FIG. 3 is a block diagram illustrating a spatial volume extraction model of FIG. 1.

FIG. 4 is a conceptual diagram illustrating spatial volume information generated according to a patch in a bias setting unit of FIG. 3.

FIG. 5 is a block diagram illustrating a weight inference model of FIG. 1.

FIG. 6 is a conceptual diagram illustrating a configuration of knowledge stored in a knowledge database of FIG. 1.

FIG. 7 is a block diagram illustrating a comprehensive weight prediction model of FIG. 1.

[BEST MODE FOR INVENTION]

An RGB-D-based livestock weight inference AI system according to an embodiment of the present invention may include: a data collection unit for collecting, as one data set, 3D data and a 2D image acquired by capturing one or more livestock animals, wherein one or more data sets are collected; a weight inference unit for predicting the weight of a target livestock animal from the data set(s) and proposing a similarity function value and a recommended weight value, based on a knowledge database; and a comprehensive weight prediction model for deriving a final weight prediction value by receiving a weight prediction result value based on the data set(s) and predicted by the weight inference unit, wherein the weight inference unit may include: a target livestock 3D inference model for generating a weight map by receiving the data set(s) and extracting target livestock whose weight is to be measured; a spatial volume extraction model for dividing the weight map into a plurality of patches and generating a plurality of spatial volume information according to the patches; and a weight inference model for predicting weight from the plurality of spatial volume information and deriving a weight prediction result value.

[MODES FOR CARRYING OUT THE INVENTION]

Hereinafter, the description of the present invention with reference to the drawings is not limited to specific embodiments, and various modifications may be made thereto and various embodiments may be provided. In addition, the following description should be understood to include all changes, equivalents, or substitutes included in the spirit and scope of the present invention.

In the following description, the terms such as "first" and "second" are terms used to describe various elements, are not limited in meaning itself, and are only used to distinguish one element from another.

Like reference numbers used throughout the present specification represent like elements.

The singular forms as used herein are intended to include the plural forms as well unless the context clearly indicates otherwise. The terms "comprise," "include," and "have" as used herein are inclusive and therefore specify the presence of stated features, integers, steps, operations, elements, components, or combinations thereof, but do not preclude the presence or addition of one or more other features, integers, steps, operations, elements, components, or combinations thereof.

Unless defined otherwise, all terms including technical or scientific terms as used herein have the same meaning as commonly understood by those of ordinary skill in the art. It will be understood that terms, such as those defined in commonly used dictionaries, should be interpreted as having a meaning that is consistent with their meaning in the context of the relevant art and will not be interpreted in an idealized or overly formal sense unless expressly so defined herein.

In addition, the terms such as "unit" and "module" described in the specification mean units for processing at least one function or operation, and may be implemented as hardware, software, or a combination of hardware and software.

Hereinafter, an RGB-D-based livestock weight inference AI system and a computer-readable medium according to embodiments of the present invention will be described in detail with reference to the accompanying drawings.

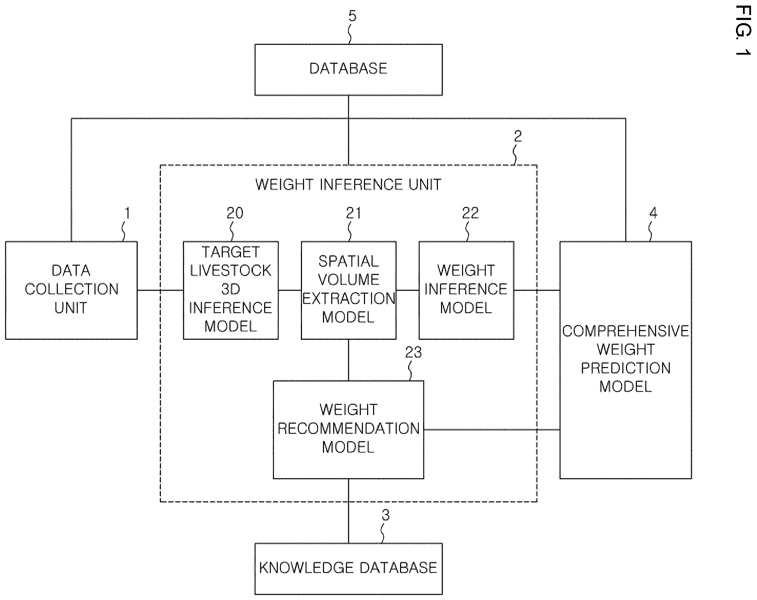

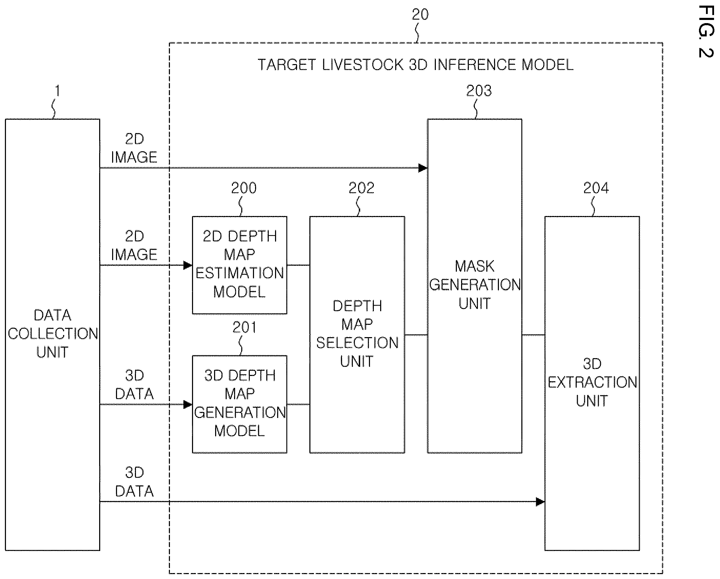

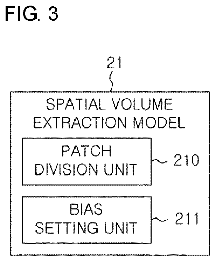

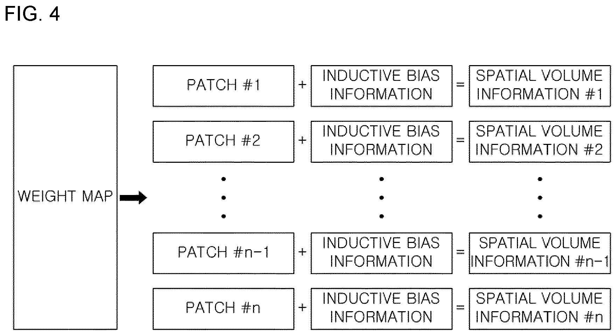

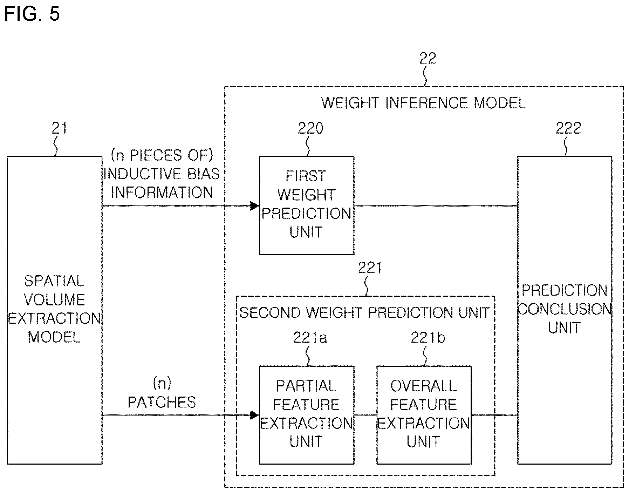

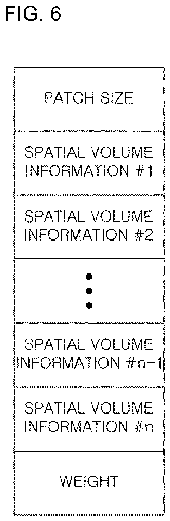

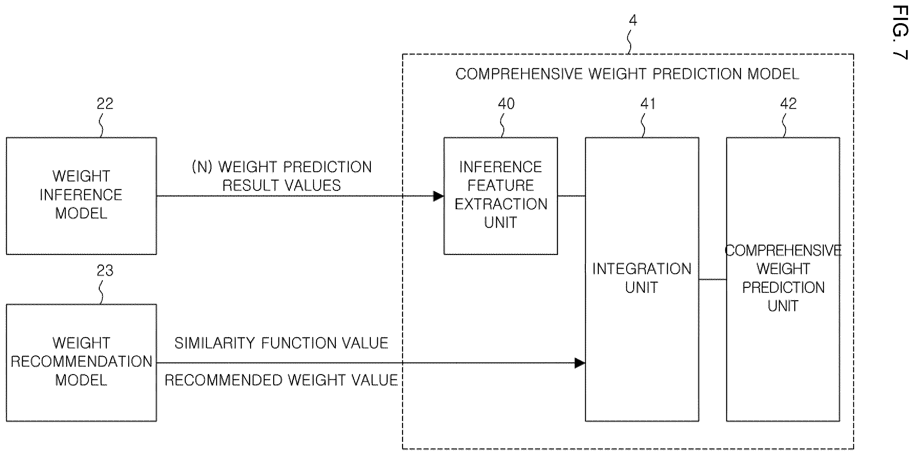

FIG. 1 is a block diagram illustrating an RGB-D-based livestock weight inference AI system according to an embodiment of the present invention, FIG. 2 is a block diagram illustrating a target livestock 3D extraction model of FIG. 1, FIG. 3 is a block diagram illustrating a spatial volume extraction model of FIG. 1, FIG. 4 is a conceptual diagram illustrating spatial volume information generated according to a patch in a bias setting unit of FIG. 3, FIG. 5 is a block diagram illustrating a weight inference model of FIG. 1, FIG. 6 is a conceptual diagram illustrating a configuration of knowledge stored in a knowledge database of FIG. 1, and FIG. 7 is a block diagram illustrating a comprehensive weight prediction model of FIG. 1.

The RGB-D-based livestock weight inference AI system (hereinafter referred to as 'AI system') according to an embodiment of the present invention configures 2D images and 3D data acquired by capturing livestock as one data set and is trained through a plurality of data sets. Therefore, when a data set (2D image and 3D data) of a target livestock whose weight is to be measured is input, the AI system may predict the weight of the target livestock.

Referring to FIG. 1, the RGB-D-based livestock weight inference AI system according to an embodiment of the present invention may include a data collection unit 1, a weight inference unit 2, a knowledge database 3, a comprehensive weight prediction model 4, and a database 5.

The data collection unit 1 may collect 2D images and 3D data acquired by capturing one or more livestock as one data set. The data collection unit 1 may collect one or more (1, 2, ..., N) data sets.

In this case, in the data set, only the target livestock whose weight is to be measured may be captured, or one or more livestock other than the target livestock may be captured together.

In addition, one or more data sets may be acquired by one capturing, and it is preferable to secure a plurality of data sets, but the present invention is not limited thereto.

The data collection unit 1 may store one or more collected data sets in the database 5, and may input one or more data sets to the weight inference unit 2 so as to derive a weight prediction result value, a similarity function value, and a recommended weight value.

The weight inference unit 2 is trained through a plurality of data sets by applying artificial intelligence. Therefore, when the data set is input, the weight inference unit 2 infers the weight of the target livestock. The weight inference unit 2 may predict the weight of each target livestock from one or more data sets, and may suggest a similarity function value and a recommended weight value based on the knowledge database 3.

The weight inference unit 2 may include a target livestock 3D inference model 20, a spatial volume extraction model 21, a weight inference model 22, and a weight recommendation model 23.

The target livestock 3D inference model 20 extracts only the shape of the target livestock from 3D data by using the data set. The target livestock 3D inference model 20 may receive the data set, may extract the target livestock whose weight is to be measured, and may generate a weight map that is 3D information of the target livestock.

Referring to FIG. 2, the target livestock 3D inference model 20 may include a 2D depth map estimation model 200, a 3D depth map generation model 201, a depth map selection unit 202, a mask generation unit 203, and a 3D extraction unit 204.

The 2D depth map estimation model 200 may estimate an estimated depth map from the 2D image of the data set. That is, the 2D depth map estimation model 200 estimates the depth by using the perspective of the 2D image to generate the estimated depth map.

To this end, the 2D depth map estimation model 200 is an AI model to which a convolutional neural network (CNN) is applied, and a VGG Net or the like may be applied, but the present invention is not limited thereto.

In addition, when the VGG Net is applied, the 2D depth map estimation model 200 may include 28 layers, but the present invention is not limited thereto, and the 2D depth map estimation model 200 may be variously changed and applied.

More specifically, the 2D depth map estimation model 200 may assign a weight according to Equation 1 below according to the position and color of each pixel of the 2D image.

[Equation 1]

$$W_{(px,py,pc)} = ax_{(px,pypc)} + b$$

where W represents the weighted pixel element value, x represents the pixel element, px, py, and pc represent pixel positions (rows and columns) and channel element values, and a and b represent weight adjustment values.

In addition, the 2D depth map estimation model 200 may infer the estimated depth map by extracting features from the 2D image to which the weight is assigned through the convolution operation.

The 3D depth map generation model 201 may be trained as an AI model to generate the measured depth map from the 3D image in the data set.

In this case, the 3D depth map generation model 201 may normalize and flatten the 3D data to generate the measured depth map.

Specifically, the 3D depth map generation model 201 may normalize the 3D data by using Equation 2 below. This is a process of performing conversion into an image form by converting a depth value of the 3D data into a color value, and the depth value may be adjusted to become the color value within a channel range (0 to 255).

[Equation 2]

$$\text{Norm}_{(px,py,pz)} = \left(1 - \frac{x_{(px,py,pz)}}{\max(x_{pz})}\right) * 255$$

where Norm represents a normalized pixel element value, x represents a pixel element, and px, py, and pz represent pixel position (row, column, depth) element values.

In addition, the 3D depth map generation model 201 may flatten the normalized 3D data through Equation 3 below and may extract features from the flattened 3D data to generate the measured depth map.

[Equation 3]

$$\text{Equalized}(v) = \text{round}\left(\frac{cdf(v) - cdf_{min}}{(M \times N) - cdf_{min}} \times 255\right)$$

where Equalized(v) represents the flattened 3D data, v represents the normalized 3D data, cdf represents the cumulative distribution function made of each element, and (MxN) represents the number of pixels.

Here, the flattening may make the 3D data clearer, thereby further improving extraction accuracy.

The depth map selection unit 202 may select one of the estimated depth map and the measured depth map as the precise depth map, and may select a precise depth map by using Equation 4 below.

[Equation 4]

$$\text{IoU} = \text{Overlapping Region / Combined Region}$$

where Overlapping Region represents the size of the region where the measured depth map and the estimated depth map overlap each other, and Combined Region represents the size of the region where the measured depth map and the estimated depth map are combined with each other.

That is, the depth map selection unit 202 may calculate IoU through Equation 4 above. When the IoU value is greater than or equal to a reference value, the depth map selection unit 202 may select the measured depth map as the precise depth map. When the IoU value is less than the reference value, the depth map selection unit 202 may select the estimated depth map as the precise depth map.

On the other hand, the reference value of the IoU may be set to 0.9, but the present invention is not limited thereto.

On the assumption that the 3D data has more noise than the 2D image. when the difference between the estimated depth map derived from the 2D image and the measured depth map derived from the 3D image is large, it is determined that there is an error in the measured depth map derived from the 3D data, and the estimated depth map is selected and used.

The mask generation unit 203 may generate a mask for extracting the target livestock by using the 2D image of the data set input from the data collection unit 1 and the precise depth map input from the depth map selection unit 202. That is, the mask is generated by extracting only the target livestock from the 2D image and the precise depth map.

The 3D extraction unit 204 may receive the 3D data of the data set and the mask from the data collection unit 1 and the mask generation unit 203, respectively, and may generate the weight map of the target livestock from the 3D data through the mask.

In this case, the 3D extraction unit 204 may extract the weight map through element-wise multiplication of the 3D data and the mask. The element-wise multiplication operation is a method of multiplying elements at the same position.

The spatial volume extraction model 21 is another AI model, and may be trained to extract spatial volume information by using 3D information. Accordingly, the spatial volume extraction model 21 may divide the weight map into a plurality of patches, and may generate a plurality of spatial volume information according to the patches.

This is to make it possible to predict the weight by extracting and using the spatial volume information because the weight is related to the volume.

Referring to FIG. 3, the spatial volume extraction model 21 may include a patch division unit 210 and a bias setting unit 211.

The patch division unit 210 may divide the weight map input from the target livestock 3D inference model 20 into equal sizes horizontally and vertically to thereby configure a plurality (1, 2, ..., n-1, n) of patches.

For example, when patches are formed by cutting a 160x160 weight map into a size of 16x16, 100 patches may be generated. The size of these patches may be variously changed according to circumstances.

As illustrated in FIG. 4, the bias setting unit 211 may generate a plurality (n pieces) of spatial volume information by deriving inductive bias information for each patch with respect to n patches generated by the patch division unit 210.

The spatial volume information may include the patch and the inductive bias information. The inductive bias information may include one or more of an average, a standard deviation, a minimum value, and a maximum value of the spatial volume according to the patch. It is preferable to include all of the average, the standard deviation, the minimum value, and the maximum value of the spatial volume, but the present invention is not limited thereto.

The weight inference model 22 is an AI model in which weight is learned from the spatial volume information. The weight inference model 22 may derive a weight prediction result value by receiving a plurality of spatial volume information from the spatial volume extraction model 21 and predicting the weight of the target livestock.

Referring to FIG. 5, the weight inference model 22 may include a first weight prediction unit 220, a second weight prediction unit 221, and a prediction conclusion unit 222.

The first weight prediction unit 220 may linearly convert a plurality of inductive bias information according to a plurality of spatial volume information and may extract a feature from the linearly converted inductive bias information to derive a first weight prediction value. The extracted feature may include the posture, head direction, and distance of the target livestock, but the present invention is not limited thereto.

To this end, a multi-layer perceptron block may be applied to the first weight prediction unit 220. The multi-layer perceptron block may include a dense layer (Dense), an activation function, and a dense layer (Dense), but the present invention is not limited thereto.

When an input value is input, the dense layer (Dense) may execute learning and inference processes through complex operations such as multiple multiplication and summation through extracted feature so as to output an output value.

The second weight prediction unit 221 may derive the weight prediction result value more accurately by compensating for the first weight prediction value extracted by the first weight prediction unit 220. Since the spatial volume value changes due to the feature (posture, etc.) of the livestock, the second weight prediction unit 221 may perform weight prediction by additionally checking partial features and overall features through the patch, thereby further improving accuracy.

Since the first weight prediction unit 220 is configured as described above, the process of predicting the weight of the target livestock may be performed more quickly and accurately.

The second weight prediction unit 221 may linearly convert a plurality of patches according to a plurality of spatial volume information, may convert the linearly converted patches into tensors, and may extract a second weight prediction value by extracting a feature from the patches converted into the tensors. The second weight prediction unit 221 may include a partial feature extraction unit 221a and an overall feature extraction unit 221b.

The partial feature extraction unit 221a may linearly convert patches of the spatial volume information, may convert the linearly converted patches into tensors, and may acquire a feature tensor by extracting a feature from the patches converted into the tensors. The extracted feature is a partial feature of the target livestock, and may include parts (nose, eyes, ears, tail, etc.) and part positions of the target livestock, but the present invention is not limited thereto.

A multi-layer perceptron block may also be applied to the partial feature extraction unit 221a. The multi-layer perceptron block may include a dense layer (Dense), an activation function, and a dense layer (Dense), but the present invention is not limited thereto.

The overall feature extraction unit 221b may transpose the feature tensor, which is a result of feature extraction through the first weight prediction unit 220, and may derive a second predicted weight value by extracting a feature from the transposed feature tensor. The extracted feature is an overall feature of the target livestock, and may be a posture (lying, sitting, etc.) or a behavior (eating, etc.) of the target livestock, but the present invention is not limited thereto.

Since the multi-layer perceptron block may be applied to the overall feature extraction unit 221b in the same way as the partial feature extraction unit 221a, a detailed description thereof will be omitted.

The first weight prediction unit 220 and the second weight prediction unit 221 are provided to perform the weight prediction and infer the weight prediction result value by integrating the weight prediction values. Therefore, excellent measurement accuracy may be acquired and weight prediction may be performed in a short time.

In addition, the weight prediction of the target livestock for a general data set can also be performed by the first weight prediction unit 220. However, since the second weight prediction unit 221 is also configured, weight prediction for a data set having exceptional features may be performed more easily.

The prediction conclusion unit 222 may derive the weight prediction result value by executing an inference process based on the first weight prediction value and the second weight prediction value acquired from the first and second weight prediction units 220 and 221.

In this case, when there is a difference between the first weight prediction value and the second weight prediction value, the prediction conclusion unit 222 may derive the weight prediction result value by trusting the second weight prediction value. The second weight prediction unit 221 is configured to cope with exceptional situations. Therefore, when there is a difference between the first weight prediction value and the second weight prediction value, the second weight prediction unit 221 determines it as an exceptional situation and trusts the second weight prediction value.

The prediction conclusion unit 222 may be implemented as a fully-connected layer to perform the above process, but the present invention is not limited thereto.

The weight recommendation model 23 is a mathematical model, and may propose a similarity function value and a recommended weight value for the data set, based on the knowledge database 3. However, the present invention is not limited thereto, and the weight recommendation model 23 may be implemented as a deep learning model other than the mathematical model.

On the other hand, the knowledge database 3 stores a plurality of knowledge. As illustrated in FIG. 6, the knowledge may include a patch size, a plurality of spatial volume information, and weight, and may be in a form arranged in a row, but the present invention is not limited thereto.

Accordingly, the weight recommendation model 23 may search for knowledge from the knowledge database 3 through the plurality of spatial volume information of the corresponding data set, and may propose a similarity function value and a recommended weight value.

More specifically, the weight recommendation model 23 may search for knowledge from the knowledge database 3 by using the plurality of spatial volume information of the data set, based on the patch size.

Thereafter, the weight recommendation model 23 may calculate the similarity to the data set for the knowledge found as the knowledge search result, and may select knowledge having a high similarity among the knowledge search results. The similarity of each knowledge may be calculated through Equation 5 below to acquire the similarity function value.

[Equation 5]

$$df_{simility}(patch\ size, sv_1, \cdots, sv_n) = \sum |sv_i - sv_{ik}| \quad given\ path\ size$$

where sv represents the spatial volume information, i represents the spatial volume information number, and k represents the knowledge number in the knowledge database. In this case, as the similarity function value is closer to zero, the similarity is higher.

Accordingly, the weight recommendation model 23 may propose the similarity function value and the recommended weight value according to the selected knowledge, and the similarity function value and recommended weight value may be transmitted to the comprehensive weight prediction model 4.

When N data sets are provided, the weight inference unit 2 configured as described above derives the weight prediction result value, the similarity function value, and the recommended weight value for each data set. Therefore, the same process may be repeated N times.

The comprehensive weight prediction model 4 may derive a final weight prediction value by receiving all weight prediction result values, similarity function values, and recommended weight values according to one or more (N) data sets from the weight inference unit 2.

Referring to FIG. 7, the comprehensive weight prediction model 4 may include an inference feature extraction unit 40, an integration unit 41, and a comprehensive weight prediction unit 42.

The inference feature extraction unit 40 may receive the weight prediction result values according to one or more data sets from the weight inference model 22 and may generate weight inference feature information according to the weight prediction result values through inference.

The weight inference feature information may include one or more of an average, a standard deviation, a minimum value, a maximum value, and a median value of one or more weight prediction result values. It is preferable to include all of the average, the standard deviation, the minimum value, the maximum value, and the median value of one or more weight prediction result values, but the present invention is not limited thereto, and a variety of feature information may be included.

The inference feature extraction unit 40 uses the weight inference feature information extracted through inference, instead of using the weight prediction result values according to one or more data sets as they are, and may derive the final weight prediction value, thereby further improving weight derivation accuracy.

The integration unit 41 may receive weight inference feature information, a similarity function value, and a recommended weight value, and may integrate the information through linear conversion.

The comprehensive weight prediction unit 42 may derive the final weight prediction value from the integrated information from the integration unit 41. In addition, when deriving the final weight prediction value, the comprehensive weight prediction unit 42 may select whether to use the recommended weight value according to the similarity function value. That is, as the similarity function value is smaller, the recommended weight value may be used.

On the other hand, the comprehensive weight prediction unit 42 may be implemented as a fully-connected layer and derive the final weight prediction value through learning, but the present invention is not limited thereto.

The database 5 may store all pieces of information (data) generated or input in each model.

In addition, the present invention may be implemented by storing computer-readable code in a computer-readable storage medium. The computer-readable storage medium include any types of storage devices that store data readable by a computer system.

When the data set of images of livestock is collected and learned by the RGB-D-based livestock weight inference AI system in the computer-readable storage medium and the weight of livestock is predicted from the input data set, the computer-readable code is configured to perform the processes of predicting the weight of livestock according to the present invention. The computer-readable code may be implemented in various programming languages. Functional programs, codes, and code segments for implementing the present invention may be easily programmed by those of ordinary skill in the art.

Examples of the computer-readable storage medium include a read-only memory (ROM), a random access memory (RAM), a compact disc read-only memory (CD-ROM), a magnetic tape, a floppy disk, an optical data storage device, and the like, and may include those implemented in the form of carrier wave (for example, transmission over Internet). The computer-readable recording medium may be distributed in network-connected computer systems, and computer-readable code may be stored and executed in a distributed manner.

In the RGB-D-based livestock weight inference AI system and the computer-readable medium, the accuracy of livestock weight prediction is better by inferring the weight of livestock by using 2D images and 3D data together based on RGB-D.

In addition, faster measurement may be enabled by applying an AI-based direct recognition technology.

In addition, since the weight is derived by considering the recommended weight value and the similarity function value based on the knowledge database, the accuracy and reliability of the system may be secured by inferring the weight more accurately even when the non-trained data set is input.

In addition, no additional facilities are required to measure the weight of livestock, and there is no inconvenience of guiding livestock to stop for a certain time so as to measure the weight. Therefore, it is possible to solve the problems caused by the shortage of manpower in farms, the aging of manpower, and the enlargement of scale.

In this manner, it is easy to manage the weight of livestock continuously and it is possible to accurately predict the time of shipment, thereby increasing the incomes of farmers.

On the other hand, the present invention may be applied not only to pigs but also to various livestock such as chickens and cows, thereby expecting that the utilization thereof will be expanded.

Although the embodiments of the present invention have been described with reference to the accompanying drawings, those of ordinary skill in the art to which the present invention pertains will understand that the present invention may be embodied in other specific forms without changing the technical spirit or essential features. Therefore, it will be understood that the embodiments described above are illustrative in all aspects and are not restrictive.

[Reference Signs List]

1: Data collection unit
2: Weight inference unit
20: Target livestock 3D inference model
200: 2D depth map estimation model
201: 3D depth map generation model
202: Depth map selection unit
203: Mask generation unit
204: 3D extraction unit
21: Spatial volume extraction model
210: Patch division unit
211: Bias setting unit
22: Weight inference model
220: First weight prediction unit

221: Second weight prediction unit
221a: Partial feature extraction unit
221b: Overall feature extraction unit
222: Weight inference unit
23: Weight recommendation model
3: Knowledge database
4: Comprehensive weight prediction model
40: Inference feature extraction unit
41: Integration unit
42: Comprehensive weight prediction unit
5: Database

**Claims**

1. An RGB-D-based livestock weight inference AI system comprising:

   a data collection unit for collecting, as one data set, 3D data and a 2D image acquired by capturing one or more livestock animals, wherein one or more data sets are collected;
   a weight inference unit for predicting the weight of a target livestock animal from the data set(s) and proposing a similarity function value and a recommended weight value, based on a knowledge database; and
   a comprehensive weight prediction model for deriving a final weight prediction value by receiving a weight prediction result value based on the data set(s) and predicted by the weight inference unit,
   wherein the weight inference unit comprises:

   a target livestock 3D inference model for generating a weight map by receiving the data set(s) and extracting target livestock whose weight is to be measured;
   a spatial volume extraction model for dividing the weight map into a plurality of patches and generating a plurality of spatial volume information according to the patches; and
   a weight inference model for predicting weight from the plurality of spatial volume information and deriving a weight prediction result value.

2. The RGB-D-based livestock weight inference AI system of claim 1, wherein the weight inference unit further comprises a weight recommendation model for proposing the similarity function value and the recommended weight value by searching for knowledge through the data set in a knowledge database in which knowledge including a patch size, a plurality of spatial volume information, and a weight is stored, and
   the comprehensive weight prediction model receives the weight prediction result value, the similarity function value, and the recommended weight value based on the data set and derives the final weight prediction value.

3. The RGB-D-based livestock weight inference AI system of claim 1, wherein the target livestock 3D inference model comprises:

   a 2D depth map estimation model for inferring an estimated depth map from the 2D image of the data set;
   a 3D depth map generation model for generating a measured depth map from the 3D image of the data set;
   a depth map selection unit for selecting one of the estimated depth map and the measured depth map as a precise depth map;
   a mask generation unit for generating a mask for extracting the target livestock by using the 2D image of the data set and the precise depth map; and
   a 3D extraction unit for generating a weight map, which is 3D information of the target livestock, from the 3D data of the data set through the mask.

4. The RGB-D-based livestock weight inference AI system of claim 1, wherein the spatial volume extraction model comprises:

   a patch division unit for dividing the weight map into equal sizes to configure a plurality of patches; and
   a bias setting unit for deriving inductive bias information for each patch and generating spatial volume information including the patches and the inductive bias information, and
   the inductive bias information includes at least one of an average, a standard deviation, a minimum value, and a maximum value of a spatial volume according to the patches.

5. The RGB-D-based livestock weight inference AI system of claim 1, wherein the weight inference model comprises:

a first weight prediction unit for linearly converting inductive bias information of the space volume information and deriving a first weight prediction value by extracting a feature from the linearly converted inductive bias information;

a second weight prediction unit for linearly converting the patches of the spatial volume information, converting the linearly converted patches into tensors, and deriving a second weight prediction value by extracting a feature from the patches converted into the tensors; and

a prediction conclusion unit for deriving a weight prediction result value by using the first and second weight prediction values acquired by the first and second weight prediction units.

6. The RGB-D-based livestock weight inference AI system of claim 5, wherein the second weight prediction unit comprises:

a partial feature extraction unit for linearly converting the patches of the spatial volume information, converting the linearly converted patches into tensors, and extracting the feature from the patches converted into the tensors; and

an overall feature extraction unit for transposing a feature tensor, which is a result of feature extraction through the first weight prediction unit, and deriving the second weight prediction value by extracting a feature from the transposed feature tensor.

7. The RGB-D-based livestock weight inference AI system of claim 2, wherein the weight recommendation model searches for knowledge by using a plurality of spatial volume information of the data set based on the patch size in the knowledge database, selects knowledge having a high similarity by calculating a similarity function value between the knowledge and the data set in a knowledge search result, and proposes a similarity function value and a recommended weight value according to the selected knowledge.

8. The RGB-D-based livestock weight inference AI system of claim 2, wherein the comprehensive weight prediction model comprises:

an inference feature extraction unit for receiving the weight prediction result value based on the one or more data sets and generating weight inference feature information based on the weight prediction result value through inference;

an integration unit for receiving the weight inference feature information, the similarity function value, and the recommended weight value and integrating the information through a linear conversion; and

a comprehensive weight prediction unit for deriving the final weight prediction value from the integrated information.

9. A computer-readable recording medium having recorded thereon a computer program for providing the system of any one of claims 1 to 8.

FIG. 1

FIG. 2

EP 4 187 213 A1

FIG. 3

21

SPATIAL VOLUME
EXTRACTION MODEL

PATCH
DIVISION UNIT ~ 210

BIAS
SETTING UNIT ~ 211

FIG. 4

| WEIGHT MAP | → | | | | | | |
|---|---|---|---|---|---|---|---|

PATCH #1 + INDUCTIVE BIAS INFORMATION = SPATIAL VOLUME INFORMATION #1

PATCH #2 + INDUCTIVE BIAS INFORMATION = SPATIAL VOLUME INFORMATION #2

⋮ ⋮ ⋮

PATCH #n-1 + INDUCTIVE BIAS INFORMATION = SPATIAL VOLUME INFORMATION #n-1

PATCH #n + INDUCTIVE BIAS INFORMATION = SPATIAL VOLUME INFORMATION #n

FIG. 5

FIG. 6

| |
|---|
| PATCH SIZE |
| SPATIAL VOLUME INFORMATION #1 |
| SPATIAL VOLUME INFORMATION #2 |
| ⋮ |
| SPATIAL VOLUME INFORMATION #n-1 |
| SPATIAL VOLUME INFORMATION #n |
| WEIGHT |

FIG. 7

EP 4 187 213 A1

| | INTERNATIONAL SEARCH REPORT | International application No. |
|---|---|---|
| | | **PCT/KR2022/010504** |

**A. CLASSIFICATION OF SUBJECT MATTER**

**G01G 17/08**(2006.01)i; **G01G 9/00**(2006.01)i; **G06T 7/50**(2017.01)i; **G06T 17/00**(2006.01)i; **G06N 3/08**(2006.01)i

According to International Patent Classification (IPC) or to both national classification and IPC

**B. FIELDS SEARCHED**

Minimum documentation searched (classification system followed by classification symbols)

G01G 17/08(2006.01); G01B 11/02(2006.01); G01G 19/44(2006.01); G06G 7/60(2006.01); G06N 20/00(2019.01); G06T 3/00(2006.01); G06T 7/11(2017.01); G06T 7/50(2017.01); G06T 7/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 2D 이미지(2-dimensional image), 3D 데이터(3-dimensional data), 가축 체중 (livestock weight), AI 시스템(artificial intelligence system), 가중치 맵(Weight map)

**C. DOCUMENTS CONSIDERED TO BE RELEVANT**

| Category* | Citation of document, with indication, where appropriate, of the relevant passages | Relevant to claim No. |
|---|---|---|
| A | US 2020-0319015 A1 (BODYGRAM, INC.) 08 October 2020 (2020-10-08) <br> See claim 1 and figure 1. | 1-9 |
| A | US 2011-0196661 A1 (SPICOLA et al.) 11 August 2011 (2011-08-11) <br> See paragraphs [0065]-[0077] and figures 1a-1b. | 1-9 |
| A | KR 10-2019-0068266 A (KIM, Joung Gu) 18 June 2019 (2019-06-18) <br> See paragraphs [0024]-[0058] and figures 1-4. | 1-9 |
| A | JP 2019-194573 A (NOA K.K.) 07 November 2019 (2019-11-07) <br> See paragraphs [0011]-[0039] and figures 1-3. | 1-9 |
| A | KR 10-2264281 B1 (ANIMAL INDUSTRY DATA KOREA CO., LTD.) 14 June 2021 (2021-06-14) <br> See paragraphs [0117]-[0141] and figures 9-10. | 1-9 |

☑ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 October 2022** | **28 October 2022** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/010504**

**C.    DOCUMENTS CONSIDERED TO BE RELEVANT**

| Category* | Citation of document, with indication, where appropriate, of the relevant passages | Relevant to claim No. |
|---|---|---|
| PX | KR 10-2340290 B1 (ILLU-VATION CO., LTD.) 17 December 2021 (2021-12-17)<br>See claims 1-9 and figure 1.<br>*This document is a published earlier application that serves as a basis for claiming priority of the present international application. | 1-9 |

Form PCT/ISA/210 (second sheet) (July 2022)

**EP 4 187 213 A1**

**INTERNATIONAL SEARCH REPORT**
Information on patent family members

| International application No. |
|---|
| **PCT/KR2022/010504** |

| Patent document cited in search report | | | Publication date (day/month/year) | Patent family member(s) | | | Publication date (day/month/year) |
|---|---|---|---|---|---|---|---|
| US | 2020-0319015 | A1 | 08 October 2020 | CN | 113711235 | A | 26 November 2021 |
| | | | | EP | 3938956 | A1 | 19 January 2022 |
| | | | | US | 10962404 | B2 | 30 March 2021 |
| | | | | WO | 2020-206049 | A1 | 08 October 2020 |
| US | 2011-0196661 | A1 | 11 August 2011 | BR | PI1009931 | A2 | 15 March 2016 |
| | | | | EP | 2425215 | A2 | 07 March 2012 |
| | | | | EP | 2425215 | A4 | 29 May 2013 |
| | | | | EP | 2425215 | B1 | 24 June 2015 |
| | | | | US | 2010-0289879 | A1 | 18 November 2010 |
| | | | | US | 8351656 | B2 | 08 January 2013 |
| | | | | US | 8369566 | B2 | 05 February 2013 |
| | | | | WO | 2010-127023 | A1 | 04 November 2010 |
| | | | | WO | 2010-127277 | A2 | 04 November 2010 |
| | | | | WO | 2010-127277 | A3 | 24 February 2011 |
| KR | 10-2019-0068266 | A | 18 June 2019 | None | | | |
| JP | 2019-194573 | A | 07 November 2019 | None | | | |
| KR | 10-2264281 | B1 | 14 June 2021 | WO | 2022-145614 | A1 | 07 July 2022 |
| KR | 10-2340290 | B1 | 17 December 2021 | None | | | |

Form PCT/ISA/210 (patent family annex) (July 2022)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102122131